# EUROPEAN PATENT APPLICATION

(11) **EP 2 762 964 A1**
(43) Date of publication of application: **06.08.2014**
(21) Application number: 12797676.9
(22) Date of filing: 04.12.2012
(51) Int. Cl.: G02F 1/1343, G02F 1/1337

(54) **ARRAY SUBSTRATE AND LIQUID CRYSTAL DISPLAY**

(30) Priority: 06.12.2011 CN 201120504215 U
(71) Applicant: Boe Technology Group Co. Ltd., Beijing 100015 (CN)
(72) Inventor: XU, Xiaoling, Beijing 100176 (CN); YOU, Jaegeon, Beijing 100176 (CN)
(74) Representative: Klunker . Schmitt-Nilson . Hirsch
(86) International application number: PCT/CN2012/085854
(87) International publication number: WO 2013/083030

(57) **Abstract**

Another embodiment of the present invention provides an array substrate and a liquid crystal display. The array substrate comprises a plurality of gate lines and a plurality of data lines, and the gate lines and the data lines intersect each other to define a plurality of sub-pixel regions; each sub-pixel region comprises a first transparent electrode, a second transparent electrode and a thin film transistor (TFT), and in the sub-pixel region, a first edge of the second transparent electrode away from the TFT and along the direction of the gate lines is parallel to a second edge of a gate line for an adjacent sub-pixel region, and the second edges is the edge, closest to the first edge, of the gate line for the adjacent sub-pixel region.

## Description

### TECHNICAL FIELD

Embodiments of the present invention relates to an array substrate and a liquid crystal display.

### BACKGROUND

An Advanced Super Dimension Switching (AD-SDS or ADS) liquid crystal display (LCD) generates a multi-dimensional electric field with both an electric field produced at edges of slit electrodes in a same plane and an electric field produced between a slit electrode layer and a plate-like electrode layer, so that liquid crystal molecules at all directions, which are located directly over the electrodes and between the slit electrodes in a liquid crystal cell, can be rotated, which enhances the work efficiency of liquid crystals and increases light transmittance. The Advanced Super Dimensional Switching technology can improve the picture quality of thin film transistor liquid crystal displays (TFT-LCDs) and has advantages of high resolution, high transmittance, low power consumption, wide viewing angle, high aperture ratio, low chromatic aberration, being free of push Mura, etc.

An existing 3.5-inch single-domain product of the ADS mode presents obvious light leakage in a dark state. The rubbing direction of the 3.5-inche single-domain product of the ADS mode is 97 degrees, thus, when it is in an off-state, a majority of liquid crystal molecules are aligned along the rubbing direction of an alignment layer, thereby achieving a better dark state. Since electrodes, such as a source electrode connected with a data line, a gate electrode connected with a gate line, etc, are located in the periphery of a sub-pixel region, the electrical fields generated among them are complex. Under influence of these electrical fields, the liquid crystal molecules at edges of the pixels are aligned along the directions of the electrical fields, rather than along the rubbing direction. Therefore, light leakage occurs at these positions.

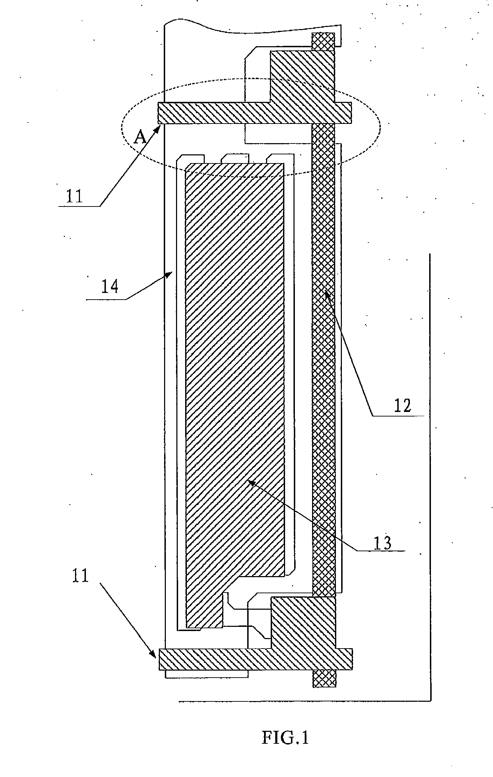

Fig. 1 illustrates a TFT array substrate in prior art. The TFT array substrate comprises sub-pixel regions defined by gate lines 11 and data lines 12 that intersect each other transversely and longitudinally, each of the sub-pixel regions comprises a pixel electrode 13 and a common electrode 14. Because the electrical fields generated among the gate lines 11, the data lines 12, the pixel electrode 13 and the common electrode 14 are complex, under influence of the electrical fields, the liquid crystal molecules at the region A of Fig. 1 are to be aligned along the directions of the electrical fields, rather than along a rubbing direction. Therefore, when the TFT-LCD is in an on-state during operation mode, dark-state light leakage will occur at the region A inevitably.

If the area of the black matrixes (BM) is increased for shielding the region of light leakage, the light leakage due to the deviation of the liquid crystal molecules from the rubbing direction is reduced; however, it also results in loss of aperture ratio, thereby affecting the transmittance and contrast ratio.

### SUMMARY

Embodiments of the present invention provide an array substrate and a liquid crystal display, in order to correct the directions of the electrical fields generated at edges of sub-pixel regions, thereby improving the arrangement of the liquid crystal molecules in a dark state and decreasing dark-state light leakage.

An embodiment of the present invention provides an array substrate, comprising: gate lines extending along a horizontal direction and date lines extending along a vertical direction, said gate line and the data line intersecting each other to define a plurality of sub-pixel regions, wherein a first transparent electrode and a second transparent electrode are disposed in each sub-pixel region; at a bottom of the sub-pixel region, a first location of the second transparent electrode has a first tilt angle relative to the horizontal direction, a second location has a second tilt angle relative to the horizontal direction, and a third location has a third tilt angle relative to the horizontal direction; and the first tilt angle allows a deviation between an electrical field direction and a rubbing direction at the first location of the second transparent electrode to be smaller than a first preset angle, the second tilt angle allows a deviation between an electrical field direction and a rubbing direction at the second location of the second transparent electrode to be smaller than a second preset angle, and the third tilt angle allows a deviation between an electrical field direction and a rubbing direction at the third location of the second transparent electrode to be smaller than a third preset angle.

For the array substrate, for instance, for each sub-pixel region, a first location of a corresponding gate line at the bottom of the sub-pixel region has a fourth tilt angle relative to the horizontal direction, a second location has a fifth tilt angle relative to the horizontal direction, and a third location has a sixth tilt angle relative to the horizontal direction; the forth tilt angle allows a deviation between an electrical field direction and a rubbing direction at the first location of the gate line to be smaller than a forth preset angle, the fifth tilt angle allows a deviation between an electrical field direction and a rubbing direction at the second location of the gate line to be smaller than a fifth preset angle, and the sixth tilt angle allows a deviation between an electrical field direction and a rubbing direction at the third location of the gate line to be smaller than a sixth preset angle.

For the aforementioned array substrate, for instance, the first tilt angle of the second transparent electrode may be in a range of 20∼40 degrees.

For the aforementioned array substrate, for instance, the second tilt angle of the second transparent electrode may be 7 degrees.

For the aforementioned array substrate, for instance, the third tilt angle of the second transparent electrode may be in a range of 40∼80 degrees.

For the aforementioned array substrate, for instance, the fourth tilt angle of the corresponding gate line may be in a range of 40∼80 degrees.

For the aforementioned array substrate, for instance, said fifth tilt angle of the corresponding gate line may be in the range of 20∼50 degrees.

For the aforementioned array substrate, for instance, the sixth tilt angle of the corresponding gate line may be 83 degrees.

Another embodiment of the present invention provides an array substrate, comprising: a plurality of gate lines and a plurality of data lines, the gate lines and the data lines intersecting each other to define a plurality of sub-pixel regions, wherein each sub-pixel region comprises a first transparent electrode, a second transparent electrode and a thin film transistor (TFT), and in the sub-pixel region, a first edge of the second transparent electrode away from the TFT and along the direction of the gate lines is parallel to a second edge of the gate line for an adjacent sub-pixel region, and the second edge is the edge, closest to the first edge, of the gate line of the adjacent sub-pixel region.

For the aforementioned array substrate, for instance, the first edge and the second edge may be perpendicular to a rubbing direction of the array substrate.

For the aforementioned array substrate, for instance, the distance between the first edge and the second edge may be in a range of 5-10µm.

For the aforementioned array substrate, for instance, the angle between the rubbing direction and the data lines may be 7°.

Another embodiment of the present invention provides a crystal display, comprising: an opposed substrate; any one of the aforementioned array substrates; and a liquid crystal layer, wherein the array substrate is disposed in opposition with the opposed substrate, and the liquid crystal layer is provided between the opposed substrate and the array substrate.

### BRIEF DESCRIPTION OF THE DRAWINGS

In order to clearly illustrate the technical solution of the embodiments of the invention, the drawings of the embodiments will be briefly described in the following; it is obvious that the described drawings are only related to some embodiments of the invention and thus are not limitative of the invention.
Fig. 1 is an illustrative partial diagram of an existing array substrate;
Fig. 2 is a partial top view of an array substrate according to Embodiment 1 of the present invention;
Fig. 3 is a partial top view of an array substrate according to Embodiment 2 of the present invention; and
Fig. 4 is an illustrative diagram of a liquid crystal display according to an embodiment of the present invention.

### DETAILED DESCRIPTION

In order to make objects, technical details and advantages of the embodiments of the invention apparent, the technical solutions of the embodiments will be described in a clearly and fully understandable way in connection with the drawings related to the embodiments of the invention. It is obvious that the described embodiments are just a part but not all of the embodiments of the invention. Based on the described embodiments herein, those skilled in the art can obtain other embodiment(s), without any inventive work, which should be within the scope of the invention.

Unless otherwise defined, all the technical and scientific terms used herein have the same meanings as commonly understood by one of ordinary skill in the art to which the present invention belongs. The terms "first," "second," etc., which are used in the description and the claims of the present application for invention, are not intended to indicate any sequence, amount or importance, but distinguish various components. Also, the terms such as "a," "an," etc., are not intended to limit the amount, but indicate the existence of at lease one. The terms "comprises," "comprising," "includes," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "right," "left" and the like are only used to indicate relative position relationships, and when the position of the object which is described is changed, the relative position relationship may be changed accordingly.

In a liquid crystal display, when liquid crystals filled between an array substrate and a color filter substrate are subject to the effect of alignment layers, which have been rubbed, on the array substrate and the color filter substrate, the liquid crystals will be aligned along a certain direction in the space within the liquid crystal cell, an angle of approximately 2 to 3 degrees generally exists between this direction and the rubbing direction of the alignment layer within the plane of the substrate; the projection of this direction onto the plane, where the array substrate or the color filter substrate is located, is referred to as an alignment direction, and the alignment direction is identical with the rubbing direction of the alignment layer.

### Embodiment 1

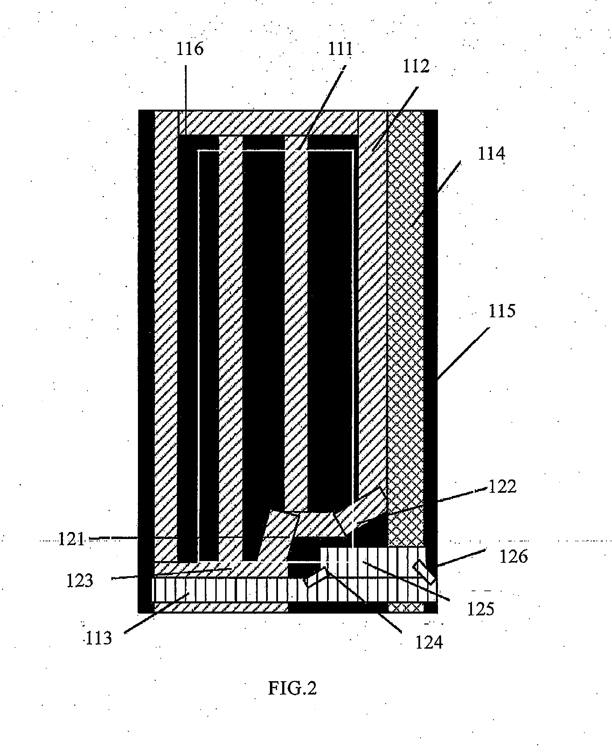

As shown in Fig. 2, an array substrate provided in Embodiment 1 comprises a plurality of gate lines 113 and a plurality of data lines 114, the gate lines 113 and the data lines 114 intersect each other, which defines a plurality of sub-pixel regions, and the sub-pixel regions are arranged in an array. A first transparent electrode 111, a second transparent electrode 112, and a thin film transistor(TFT) acting as a switch element are disposed in each of the sub-pixel regions. For each of the sub-pixel regions, the corresponding gate line 113 is connected with a gate electrode (the gate electrode is not shown in drawings) of the TFT, while the corresponding data line 114 is connected with a source electrode (the source electrode is not shown in drawings) of the TFT.

The first transparent electrode 111 and the second transparent electrode 112 are mutually overlapped, one of the electrodes is a pixel electrode which is electrically connected with a drain of the TFT, and the other is a common electrode which is electrically connected with, for example, a common electrode line (not shown). Here, the second transparent electrode 112 is disposed in an upper layer and is of a slit electrode; the first transparent electrode 111 is disposed in a lower layer and may be of a plate electrode or a slit electrode. The slit electrode includes a plurality of slits (for example, slits 116 of the second transparent electrode 112) parallel to each other, and this electrode is divided into several portions by the slits. The slits can be open in one end or closed all around.

The first transparent electrode 111 and the second transparent electrode 112 can be made of a transparent electrically-conducting material, such as indium tin oxides (ITO), indium zinc oxides (IZO), etc.

In Fig. 2, a first location 121 of the second transparent electrode 112 at a bottom of the sub-pixel regions has a first tilt angle relative to the horizontal direction, a second location 122 of the second transparent electrode 112 at the bottom of the sub-pixel regions has a second tilt angle relative to the horizontal direction, and a third location 123 of the second transparent electrode 112 at the bottom of the sub-pixel regions has a third tilt angle relative to the horizontal direction.

An alignment layer (not shown in the top views) is formed on the surface of the array substrate, the alignment layer is made of, for example, polyimide (PI), and it is rubbed in a predetermined direction (i.e., a rubbing direction), so as to form, for example, fine grooves for the alignment of liquid crystals.

The first tilt angle allows a deviation between the electrical field direction and the rubbing direction at the first location 121 of the second transparent electrode 112 to be smaller than a first preset angle, and the first preset angle can be any angle that approaches to 0 degree, that is to say, the direction of the electrical field is almost parallel to or is parallel to the rubbing direction at the first location 121 of the second transparent electrode 112. The second tilt angle allows a deviation between the electrical field direction and the rubbing direction at the second location 122 of the second transparent electrode 112 to be smaller than a second preset angle, and the second preset angle can be any angle that approaches to 0 degree, that is to say, the direction of the electrical field is almost parallel to or is parallel to the rubbing direction at the second location 122 of the second transparent electrode 112. The third tilt angle allows a deviation between the electrical field direction and the rubbing direction at the third location 123 of the second transparent electrode 112 to be smaller than a third preset angle, and the third preset angle can be any one of degrees which approaches to 0 degree, that is to say, the direction of the electrical field is almost parallel to or is parallel to the rubbing direction at the third location 123 of the second transparent electrode 112.

Further, in this embodiment, for example, a first location 124 of the gate line 113 at the bottom of the sub-pixel regions has a fourth tilt angle relative to the horizontal direction, a second location 125 of the gate line 113 at the bottom of the sub-pixel regions has a fifth tilt angle relative to the horizontal direction, and a third location 126 of the gate line 113 at the bottom of the sub-pixel regions has a sixth tilt angle relative to the horizontal direction.

The fourth tilt angle allows a deviation between the electrical field direction and the rubbing direction at the first location 124 of the gate line 113 to be smaller than a fourth preset angle, and the fourth preset angle can be any angle that approaches to 0 degree, that is to say, the direction of the electrical field is almost parallel to or is parallel to the rubbing direction at the first location 124 of the gate line 113. The fifth tilt angle allows a deviation between the electrical field direction and the rubbing direction at the second location 125 of the gate line 113 to be smaller than a fifth preset angle, and the fifth preset angle can be any angle that approaches to 0 degree, that is to say, the direction of the electrical field is almost parallel to or is parallel to the rubbing direction at the second location 125 of the gate line 113. The sixth tilt angle allows a deviation between the electrical field direction and the rubbing direction at the third location 126 of the gate line 113 to be smaller than a sixth preset angle, and the sixth preset angle can be any angle that approaches to 0 degree, that is to say, the direction of the electrical field is almost parallel to or is parallel to the rubbing direction at the third location 126 of the gate line 113.

The array substrate in this embodiment can be disposed in opposition with a color filter substrate to constitute a liquid crystal cell, and the liquid crystal cell is filled with a liquid crystal material so as to obtain a liquid crystal panel. The color filter substrate is an example of an opposed substrate, and the color filter substrate can comprise a transparent substrate and black matrixes and color filter sub-pixel regions formed on the transparent substrate. The color filter sub-pixel regions correspond to the sub-pixel regions on the array substrate.

Preferably, in an example of the aforementioned embodiment, the array substrate may further comprise black matrixes 115 between the sub-pixel regions, in which case accordingly it is not necessary to form black matrixes on the opposed substrate which is assembled together with the array substrate for constructing a liquid crystal cell. The black matrixes 115 can be fabricated beneath the structure comprising the aforementioned thin film transistor, first transparent electrode, and second transparent electrode, etc.

The first tilt angle of the second transparent electrode 122 at the first location 121 may be in the range of 20∼40 degree relative to the horizontal direction (the direction X of the coordinate system in drawings), so that liquid crystal molecules in the dark state are aligned in a direction that is close to the rubbing direction.

The length of the second transparent electrode 122 at the first location 121 may be 20µm. With regard to various liquid crystal panels, the length of the second transparent electrode 122 at the first location 121 may also be another value. Since the length of the second transparent electrode 122 at the first location 121 is set to be 20µm, the direction of the electrical field at the first location is close to the rubbing direction, and finally, the liquid crystal molecules will be aligned in the direction of the electrical field.

The second tilt angle of the second transparent electrode 122 at the second location 122 may be 7 degrees, relative to the horizontal direction (the direction X of the coordinate system in drawings), so that the direction of an electrical field at this location will be changed to be close to the rubbing direction.

The downward extension length of the second transparent electrode 122 at the second location 122 can be 3µm, allowing for reducing of the electrical fields at edges of the black matrixes; of course, in various liquid crystal panels, the downward extension length of the second transparent electrode 122 at the second location 122 may be different with a common purpose for reducing the electrical fields at edges of the black matrixes.

The third tilt angle of the second transparent electrode 122 at the third location 123 may be in the range of 40∼80 degrees, relative to the horizontal direction (the direction X of the coordinate system in drawings), so that the direction of an electrical field at this location will be changed to be close to the rubbing direction.

The fourth tilt angle of the gate line 113 at the first location 124 may be in the range of 40∼80 degrees, relative to the horizontal direction, such that the direction of an electrical field at this location will be changed to be close to the rubbing direction.

The fifth tilt angle of the gate line 113 at the second location 125 may be in the range of 20∼50 degrees, relative to the horizontal direction, such that the direction of an electrical field at this location will be changed to be close to the rubbing direction.

The sixth tilt angle of the gate line 113 at the third location 126 may be 83 degrees, relative to the horizontal direction, such that the direction of an electrical field at this location will be changed to be close to the rubbing direction.

This embodiment also further provides a liquid crystal display, which comprises the aforementioned array substrate, an opposed substrate disposed in opposition with the array substrate, and a liquid crystal layer between the opposed substrate and the array substrate.

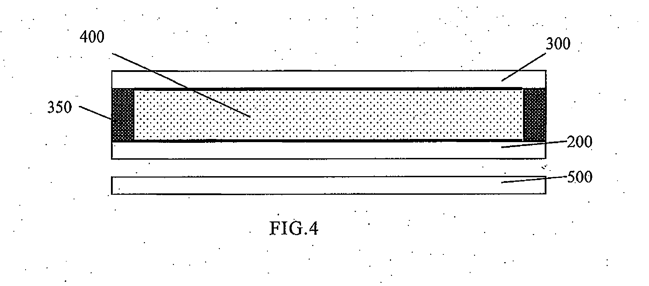

Fig. 4 is an illustrative diagram of a liquid crystal display according to an embodiment of the present invention. The display comprises: an array substrate 200, an opposed substrate 300, and a liquid crystal layer 400 between the two substrates; the array substrate 200 is disposed in opposition with the opposed substrate 300 to constitute a liquid crystal cell, the liquid crystal cell is sealed with, for example, a seal agent 350. The opposed substrate is, for example, a color filter substrate. In certain examples, the liquid crystal display device may further comprise a backlight source 500 for providing a light source for the array substrate for display. The array substrate 200 is the array substrate as shown in Fig.2.

When the aforementioned display is during operation, for example, a voltage over the gate line 113 on the array substrate is a pulse signal of -8V and +20V. For instance, a DC voltage is applied onto the first transparent electrode 111, i.e., the first transparent electrode 111 works as the common electrode; a pulse signal, which varies along with the data voltages over the data line 114, is applied onto the second transparent electrode 112, i.e., the second transparent electrode 112 is the pixel electrode. Therefore, complex electrical fields are generated between the gate line 113 and the first transparent electrode 111, between the gate line 113 and the second transparent electrode 112, and between the first transparent electrode 111 and the second transparent electrode 112. In prior art, the liquid crystal molecules around the edges of the black matrixes are not aligned completely in the rubbing direction and give rise to certain deviation. Thus, light from the backlight source 500 will be leaked at positions where the liquid crystals of the sub-pixel regions are deviated.

In the aforementioned embodiment of the present invention, each of the gate line 113 and the second transparent electrode 112 has respective tilt angles at corresponding locations by altering the shape of the gate line 113 and the second transparent electrode 112 at the bottom of the sub-pixel region, so that the direction of the electrical field at edges of the black matrixes is identical or almost identical with the rubbing direction, and in turn, the liquid crystal molecules at positions where light leakage would occur can be aligned in rubbing direction, thus the light leakage is decreased.

### Embodiment 2

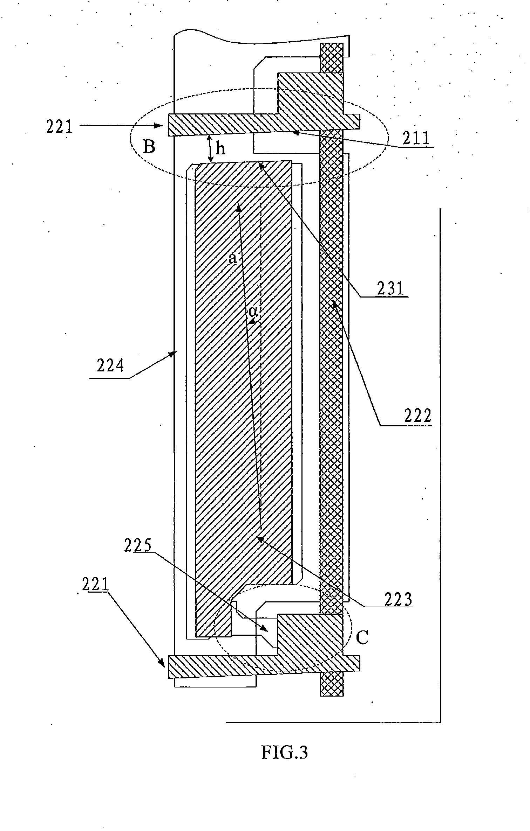

An array substrate provided in Embodiment 2 is shown in Fig. 3, the array substrate comprises a plurality of gate lines 221 and a plurality of data lines 222, and the gate lines 221 and the data lines 222 intersect each other transversely and longitudinally to define a plurality of sub-pixel regions. Each of the sub-pixel regions comprises a pixel electrode 223, a common electrode 224, and a thin film transistor (TFT) 225 acting as a switch element. The pixel electrode 223 can be of a slit electrode, including a plurality of slits parallel to each other, and the slits can be open in one end or closed all around; and the common electrode 224 can be of a plate electrode or a slit electrode.

The common electrode 224 is an example of a first transparent electrode, and the pixel electrode 223 is an example of a second transparent electrode. The first transparent electrode and the second transparent electrode can be made of a transparent electrically-conducting material, such as indium tin oxides (ITO), indium zinc oxides (IZO), etc.

In each one of the sub-pixel regions, the edge 231 (first edge) of the pixel electrode 223, which is away from the region C where the TFT 225 is located, relative to the gate line 221 for driving this sub-pixel region and extends along the direction of the gate line, is parallel to the edge 211 (second edge) of the gate line 221 for driving the adjacent sub-pixel region. The edge 211 is the edge, which is closest to the edge 231 of the pixel electrode, of the gate line 221 for driving the adjacent sub-pixel region.

In the array substrate provided in the embodiment of the present invention, in each of the sub-pixel regions, the first edge of the pixel electrode away from the TFT region and along the direction of the gate line is parallel to the second edge of the gate line for the adjacent sub-pixel region. Since the pixel electrode and the gate line are altered in relative displacement and the shape, when the liquid crystal panel is in an on-state during operation, the electrical field at the edge of the sub-pixel region away from the TFT region is changed, and in turn, the liquid crystal molecules in this region are changed to align in the rubbing direction of an alignment layer, thus the panel's problem of light leakage in a dark state has been alleviated in a simple way.

Further, an alignment layer (not shown in the top views) is formed on the surface of the array substrate, the alignment layer is made of, for example, polyimide (PI), and is rubbed in a predetermined direction so as to form fine grooves for the alignment of liquid crystals. Both the edge 231 of the pixel electrode and the edge 211 of the gate line 221 are perpendicular to the rubbing direction (alignment direction) of the alignment layer.

The distance h between the edge 231 and the edge 211 may be in the range of 5-10µm, i.e., compared to an existing pixel electrode, the pixel electrode of the present embodiment is upwardly shifted upward in Fig. 2, until it reaches a location where the distance h between the edge 231 thereof and the edge 211 of the gate line 21 is 5-10µm.

The array substrate with such a configuration of this embodiment will not affect the aperture ratio of products, since light-transmitting portions are not changed.

In another aspect, since the relative displacement of the pixel electrode, the gate line and the alignment direction of the liquid crystals are altered, when the liquid crystal panel is in an on-state during operation, the electrical field at the edge of the sub-pixel region away from the TFT region is changed, i.e., the liquid crystal molecules in region B of the drawing are aligned in the rubbing direction of an alignment layer, thus the panel's problem of light leakage in a dark state has been alleviated in a simple way.

As shown in Fig. 3, the data line 222 extends along, for example, a vertical direction, the gate line 221 extends along, for example, a horizontal direction, and the angle a between the rubbing direction of the alignment layer and the data line 222 may be 7°. It should be noted that the alignment layer is not shown in the drawings and the rubbing direction thereof is indicated as the direction of the straight line in Fig. 3. Accordingly, the edge 231 of the pixel electrode 223 and the edge 211 of the gate line 221 are perpendicular to the rubbing direction of the alignment layer in this embodiment, and the angle between the edge 231 of the pixel electrode 223 or the edge 211 of the gate line 221 and the data line is 83°. Therefore, the portion of the gate line 221 which corresponds to the sub-pixel region will not be an evenly elongated strip, and for example, the width of its left end is larger than the width of its right end. Thus, the edge 211 does not extend exactly in the horizontal direction, and the angle between the edge and the horizontal direction may be 7°, for example.

In array substrate provided in the embodiment of the present invention, in each of the sub-pixel regions, the first edge of the pixel electrode away from the TFT region and along the direction of the gate line is parallel to the second edge of the gate line of the adjacent sub-pixel region, and the first edge and the second edge are perpendicular to the rubbing direction of the alignment layer. The distance between the first edge and the second edge may be in the range of 5-10µm. Since the pixel electrode and the gate line are altered in relative displacement and the shape, when the liquid crystal panel is in an on-state during operation, the electrical field at the edge of the sub-pixel region away from the TFT region is changed, and in turn, the alignment of liquid crystal molecules in this region is changed to allows the liquid crystal molecules in this region to be aligned in the rubbing direction of the alignment layer, thus the panel's problem of light leakage in dark state has been alleviated in a simple way.

A liquid crystal display provided in this embodiment comprises the aforementioned array substrate and an opposed substrate, as shown in Fig. 4, and the configuration of the array substrate is identical with that of the array substrate in Embodiment 1, so description in detail is omitted here.

What are described above is related to the illustrative embodiments of the disclosure only and not limitative to the scope of the disclosure; the scopes of the disclosure are defined by the accompanying claims.

## Claims

1. An array substrate, comprising: gate lines extending along a horizontal direction and date lines extending along a vertical direction, said gate lines and the data lines intersecting each other to define a plurality of sub-pixel regions,
wherein a first transparent electrode and a second transparent electrode are disposed in each sub-pixel region;
at a bottom of the sub-pixel region, a first location of the second transparent electrode has a first tilt angle relative to the horizontal direction, a second location has a second tilt angle relative to the horizontal direction, and a third location has a third tilt angle relative to the horizontal direction; and
said first tilt angle allows a deviation between an electrical field direction and a rubbing direction at the first location of the second transparent electrode to be smaller than a first preset angle, the second tilt angle allows a deviation between an electrical field direction and a rubbing direction at the second location of the second transparent electrode to be smaller than a second preset angle, and the third tilt angle allows a deviation between an electrical field direction and a rubbing direction at the third location of the second transparent electrode to be smaller than a third preset angle.

2. The array substrate according to claim 1, wherein, for each sub-pixel region, at the bottom of the sub-pixel region, a first location of a corresponding gate line has a fourth tilt angle relative to the horizontal direction, a second location has a fifth tilt angle relative to the horizontal direction, and a third location has a sixth tilt angle relative to the horizontal direction; and
said forth tilt angle allows a deviation between an electrical field direction and a rubbing direction at the first location of the gate line to be smaller than a forth preset angle, the fifth tilt angle allows a deviation between an electrical field direction and a rubbing direction at the second location of the gate line to be smaller than a fifth preset angle, and the sixth tilt angle allows a deviation between an electrical field direction and a rubbing direction at the third location of the gate line be smaller than a sixth preset angle.

3. The array substrate according to claims 1 or 2, wherein the first tilt angle of the second transparent electrode is in a range of 20∼40 degrees.

4. The array substrate according to any one of claims 1-3, wherein the second tilt angle of the second transparent electrode is 7 degrees.

5. The array substrate according to any one of claims 1-4, wherein the third tilt angle of the second transparent electrode is in a range of 40∼80 degrees.

6. The array substrate according to any one of claims 1-5, wherein the fourth tilt angle of the corresponding gate line is in a range of 40∼80 degrees.

7. The array substrate according to any one of claims 1-6, wherein the fifth tilt angle of the corresponding gate line is in a range of 20∼50 degrees.

8. The array substrate according to any one of claims 1-7, wherein the sixth tilt angle of the corresponding gate line is 83 degrees.

9. A crystal display, comprising:
an opposed substrate;
an array substrate according to any one of claims 1-8; and
a liquid crystal layer,
wherein the array substrate is disposed in opposition with the opposed substrate, and the liquid crystal layer is provided between the opposed substrate and the array substrate.

10. An array substrate, comprising: a plurality of gate lines and a plurality of data lines, said gate lines and the data lines intersecting each other to define a plurality of sub-pixel regions,
wherein each sub-pixel region comprises a first transparent electrode, a second transparent electrode and a thin film transistor (TFT), and in the sub-pixel region, a first edge of the second transparent electrode away from the TFT and along the direction of the gate lines is parallel to a second edge of a gate line for an adjacent sub-pixel region, and
the second edge is the edge, closest to the first edge, of the gate line for the adjacent sub-pixel region.

11. The array substrate according to claim 10, wherein the first edge and the second edge are perpendicular to a rubbing direction of the array substrate.

12. The array substrate according to claims 10 or 11, wherein a distance between the first edge and the second edge is in a range of 5-10µm.

13. The array substrate according to claim 11, wherein an angle between the rubbing direction and the data lines is 7°.

14. A crystal display, comprising:
an opposed substrate;
an array substrate according to any one of claims 10-13; and
a liquid crystal layer,
wherein the array substrate is disposed in opposition with the opposed substrate, and the liquid crystal layer is provided between the opposed substrate and the array substrate.
